Europäisches Patentamt

European Patent Office

Office européen des brevets

(19)

(11) Veröffentlichungsnummer: **0 351 753**
**A1**

# (12) EUROPÄISCHE PATENTANMELDUNG

(21) Anmeldenummer: **89113068.4**

(22) Anmeldetag: **17.07.89**

(51) Int. Cl.4: **G03G 17/00**

(30) Priorität: **19.07.88 DE 3824564**

(43) Veröffentlichungstag der Anmeldung:
**24.01.90 Patentblatt 90/04**

(84) Benannte Vertragsstaaten:
**AT BE CH DE ES FR GB IT LI NL SE**

(71) Anmelder: **Seifert, Helmut**
**St. Valentin 7**
**D-8222 Ruhpolding(DE)**

Anmelder: **Egger, Helmut**
**Langgasse 168**
**A-5400 Hallein(AT)**

(72) Erfinder: **Seifert, Helmut**
**St. Valentin 7**
**D-8222 Ruhpolding(DE)**
Erfinder: **Egger, Helmut**
**Langgasse 168**
**A-5400 Hallein(AT)**

(54) **Vorrichtung zur Sichtbarmachung von Objekt- oder Epidermal-Emissionen durch Elektrolumineszenz-Videographie-Verfahren ohne und mit Unterdruck-Ansaugkammer.**

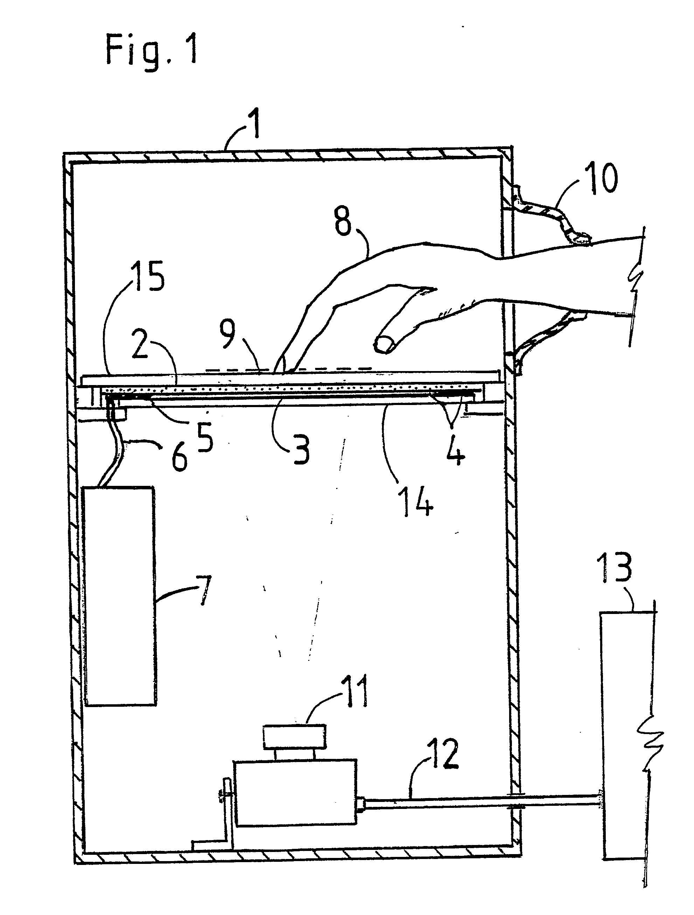

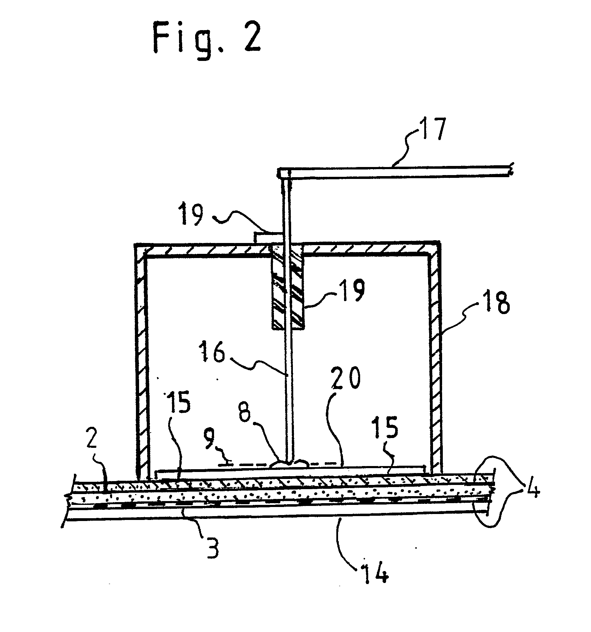

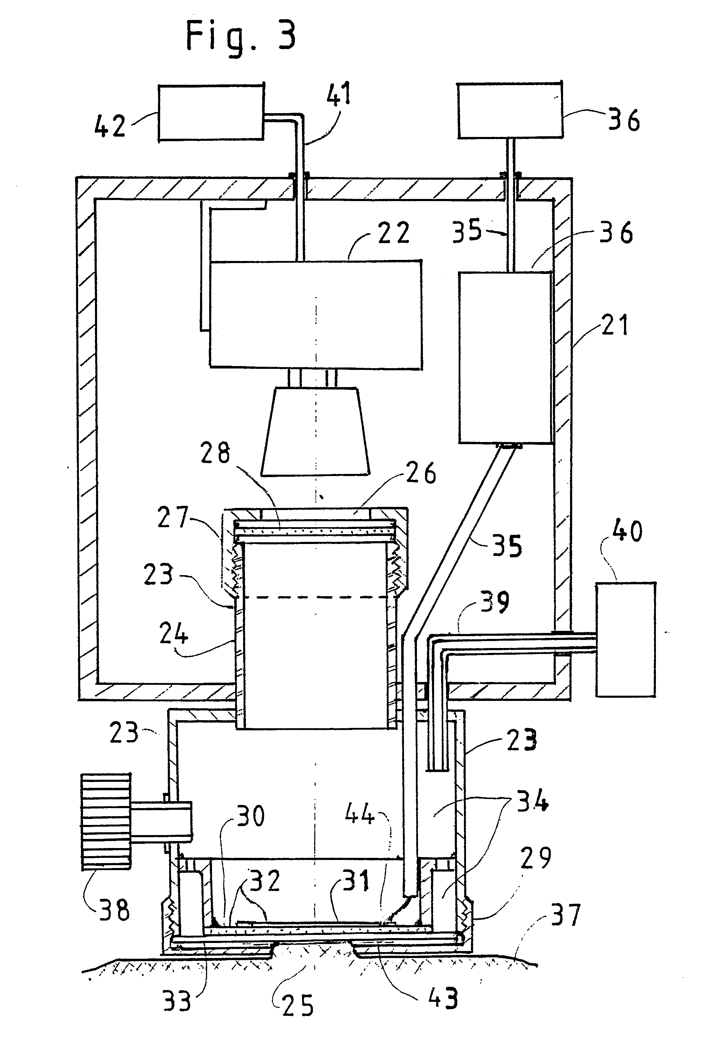

(57) Zu Diagnosezwecken werden zu untersuchende Objekte oder Hautflächen (8) in einen lichtdichtes Gehäuse (1), (18) auf eine Sicherheitsscheibe (15) mit anliegender durchsichtiger Scheibenelektrode (4) gebracht oder angedrückt. Bei Verwendung eines lichtdichten, tragbaren Gehäuses (21) mit Unterdruck- Ansaugkammer (34) wird zu Diagnosezwecken eine Hautfläche (37) durch erzeugten Unterdruck einer Luftansaugpumpe (40) an eine durchsichtige Sicherheits-Scheibe (33) mit anliegender durchsichter Scheibenelektrode (32) angedrückt. Mit einem Hochfrequenz-Hochspannungs- Generator (7), (36) wird durch elektrische Ströme an der durchsichtigen Scheibenelektrode (4), (32) ein hochgespanntes, hochfrequentes, elektromagnetisches Feld erzeugt, so daß am Objekt (8), (20) oder (37) ein Elektrolumineszenz- Leuchtbild (9), (43) sichtbar wird. Das Elektrolumineszenz- Leuchtbild (9), (43) wird von einer Fernsehkamera (11), (22) aufgenommen und an einen Fernsehbildschirm (13), (42) übertragen und sichtbar gezeigt. Figur 1 und Figur 2 zeigen in geschnittener Seitenansicht, teilweise schematischer Darstellung, die obige Anordnung ohne Unterdruck- Ansaugkammer. Figur 3 zeigt in einer geschnittenen Seitenansicht, teilweise schematischer Darstellung, die Anordnung mit Unterdruck-Ansaugkammer (34).

## Fig. 1

## Vorrichtung zur Sichtbarmachung von Objekt- oder Epidermal- Emissionen durch Elektrolumineszenz-Videographie-Verfahren ohne und mit Unterdruck-Ansaugkammer.

Die Erfindung ohne Unterdruck- Ansaugkammer bezieht sich auf eine Vorrichtung für die Erzeugung von Elektrolumineszenz - Leuchtbildern von epidermalen Emissionen oder Emissionen von anderen Objekten. Objekte werden in ein elektromagnetisches Feld von Hochfrequenz - Hochspannungsströmen auf eine durchsichtige Scheibenelektrode gelegt und die dadurch entstehenden Elektrolumineszenz - Leuchtbilder werden von einer Fernsekamera aufgenommen und auf einen Fernsehbildschirm sichtbar gemacht.

Die Erfindung mit Unterdruck - Ansaugkammer bezieht sich auf eine weitere systemgleiche Vorrichtung für die Erzeugung von Elektrolumineszenz - Leuchtbildern von epidermalen Emissionen oder anderen Objekten, wobei die Haut eines Objektes in eine Unterdruck-Kammer angesaugt und an eine durchsichtige Scheibenelektrode angedrückt wird. Dadurch, daß das Objekt in ein elektromagnetisches Feld von Hochfrequenz - Hochspannungsströmen gebracht wird, entsteht ein Elektrolumineszenz - Leuchtbild, das von einer Fernsehkamera aufgenommen wird und auf einen Fernsehbildschirm oder Monitor sichtbar gemacht wird.

Die zu untersuchenden menschlichen Hautflächen der Hände, Füße oder anderer Körperteile oder andere Objekte werden dabei auf eine Scheibenelektrode in einer Dunkelkammer gelegt oder angedrückt. Die Elektrolumineszenz- Leuchtbilder, die bei der Anwendung von elektromagnetischen hochfrequenten und hochgespannten Strömen auf einer Scheibenelektrode durch die Berührung menschlicher Körperoberflächen entstehen, können am Fernsehbildschirm sichtbar gemacht und zu medizinischen Diagnosezwecken am Computer ausgewertet werden.

Der Erfindung liegt die Aufgabe zugrunde, durch die eingangs beschriebenen Vorrichtungen, Elektrolumineszenz- Leuchtbilder von epidermalen Emissionen oder anderen Objekt- Emissionen sofort auf einem Fernsehbildschirm oder Monitor sichbar zu machen und dadurch eine augenblickliche Diagnose zu ermöglichen. Durch elektronische Weiterverarbeitung können Bilder ausgedruckt oder abfotographiert und gespeichert werden.

Das Verfahren ohne Unterdruck - Ansaugkammer wird erfindungsgemäß dadurch gelöst, daß das aufzunehmende Objekt in einer Dunkelkammer die Scheibenelektrode berührt und daß die vom Hochfrequenz - Hochspannungs generator ausgehenden elektrischen Ströme, die Elektrolumineszenz - Leuchtbilder erzeugen und dadurch Emissionen der Haut zeigen, die von einer Fernsehkamera deutlich und ohne Fremdlichteinfall aufgenommen werden und auf einen Fernsehbildschirm oder Monitor übertragen und sichtbar werden. Es hat sich gezeigt, daß die Aussagefähigkeit von Fernseh - Videostandbildern und fortlaufenden Videobildern einer epidermalen Emissions- Beobachtung auf Grund dieser Erfindung bedeutend besser sind, als die der bisher bekannten Darstellungen auf Photopapier nach dem Kirlian-Verfahren. Die durch den Kirlianeffekt erzeugten Bilder sind nur Standbilder und durch den Umweg über die Photopapierentwicklung, sowie durch längere Belichtungszeiten von eingeschränkter Qualität und haben weniger Aussagefähigkeit. Auch können Beobachtungen epidermaler Emissionen mit dem Elektrolumineszenz-Videographie- Verfahren über einen bestimmten, ununterbrochenen Zeitraum durchgeführt werden. Sie geben wichtige Hinweise für die Diagnose. Das Verfahren mit Unterdruck-Ansaugkammer wird erfindungsgemäß dadurch gelöst, daß das aufzunehmende Objekt in der Dunkelkammer an die durchsichtige Scheibenelektrode durch Saugeffekt angedrückt wird, und daß die vom Hochspannungs-Hochfrequenzgenerator ausgehenden elektrischen Ströme die Elektrolumineszenz- Leuchtbilder erzeugen und dadurch Emissionen der Haut zeigen, die von einer Fernsehkamera deutlich und ohne Fremdlichteinfall aufgenommen werden und auf einem Fernsehbildschirm oder Monitor übertragen und sichtbar werden.

Es hat sich gezeigt, daß diese Vorrichtung zusätzlich noch Vorteile aufweist, die mit dem Kirlian-Verfahren nicht machbar sind. Die Vorrichtung mit Unterdruck-Ansaugkammer macht es möglich, daß Aufnahmen von epidermal Emissionen am ganzen Körper eines Menschen gemacht werden können.

Weitere Einzelheiten, Merkmale und Vorteile der Erfindung zeigen folgende Beschreibungen. Ein Ausführungsbeispiel der Erfindung ist an Hand der Zeichnungen näher erläutert: Figur 1 zeigt in einer geschnittenen Ansicht, teilweise schematisch, die Vorrichtung ohne Unterdruck- Ansaugkammer zur Erzeugung von Elektrolumineszenz- Leuchtbilder in einer Dunkelkammer. Die Vorrichtung besteht aus einem lichtdichten Gehäuse 1, in dem eine durchsichtige Scheibe 2 angebracht ist. Auf die durchsichtige Scheibe 2 ist eine durchsichtige, elektrisch leitende Dünnschicht 3 aufgetragen. Die durchsichtige Scheibe 2 und die elektrisch leitende Dünnschicht 3 ergeben zusammen die durchsichtige Scheibenelektrode 4. Zur Sicherheit können durchsichtige Scheiben 14 und 15 an der Scheibenektrode 4 angebracht werden. Von einem Dünnschicht-Goldrahmen 5, der die elektrisch leitfähige Dünnschicht 3 umgibt, führt ein elektrisch isoliertes Kabel 6 zu einem Hochfrequenz - Hochspannungs - Generator 7. Durch die vom Hochfrequenz - Hochspannungsgenerator abgegebenen elektrischen Ströme werden bei Auflage eines Objektes, zum Beispiel eine Hand, Elektrolumineszenz - Leuchtbilder epidermaler Emissionen 9 auf der Scheibe 15 über der durchsichtigen Scheibenelektrode 4 erzeugt. Dadurch, daß die Hand 8 durch die lichtdichte Manschette mit Öffnung 10 ins Innere des Gehäuses 1 geführt wird, kann das Elektrolumineszenz- Leuchtbild 9 mit einer Fernsehkamera 11 einwandfrei aufgenommen und über ein Kabel 12 zu einem Fernsehbildschirm 13 übertragen und gezeigt werden.

Figur 2 zeigt in einer geschnittenen Ansicht, teilweise schematisch, ein Zusatz- Gerät für die Vorrichtung zur Erzeugung von Elektrolumineszenz - Leuchtbildern von Objekten und Flüssigkeiten.

Die Vorrichtung besteht aus einem lichtdichten Gehäuse 18. Eine Elektrode 16 wird durch ein Führungsrohr 19 auf einem Objekt 8, das auf einem Glas 20 liegt, senkrecht festgehalten. Zum Auswechseln des Glases 20 kann die Elektrode 16 angehoben und durch eine Federhalterung hochgehalten werden. Die Elektrode 16 ist mit einem elektrisch - isolierten Masse - Kabel 17 verbunden. Zu Diagnosezwecken werden Testuntersuchungen von Objekten und Flüssigkeiten gemacht. Dazu wird das Gehäuse 18 in das Gehäuse 1 auf die Scheibenelektrode 4 gestellt. Durch die vom Hochfrequenz- Hochspannungs - Generator abgegebenen elektrischen Ströme wird durch die Auflage eines Objektes 8 auf das Glas 20 ein spezifisches Elektrolumineszenz- Leuchtbild mit entsprechender Emissions - Charakteristik 9 über der durchsichtigen Scheibenelektrode 4 erzeugt und sichtbar. Dadurch, daß sich das Objekt 8 in dem lichtdichten Gehäuse 18 befindet, kann das Elektrolumineszenz- Leuchtbild 9 mit einer Fernsehkamera 11 einwandfrei aufgenommen und über ein Kabel 12 zu einem Fernsehbildschirm 13 übertragen und gezeigt werden.

Figur 3 zeigt in einer geschnitten Ansicht, teilweise schematisch die Vorrichtung mit Unterdruck - Ansaugkammer zur Erzeugung von Elektrolumineszenz - Leuchtbildern von epidermalen Emissionen, sowie eine Fernsehkamera zur Aufnahme von diesen Elektrolumineszenz-Leuchtbildern. Die Vorrichtung besteht aus einem lichtdichten Gehäuse 21, in dem eine Fernsehkamera 22 befestigt ist. Vor der Fernsehkamera 22 ist eine Unterdruck - Ansaugkammer 34, bestehend aus den Gehäuseteilen 23, 24, 27, 29 und den Gläsern 28 und 33 und einer Scheibenelektrode 32. Die Scheibenelektrode 32 besteht aus einer durchsichtigen Scheibe 30, einer elektrisch leitfähigen Dünnschicht 31 und einem Dünnschicht- Goldrahmen 44. Vom Dünnschicht-Goldrahmen 44, der die elektrischleitfähige Dünnschicht 31 umgibt, führt ein Kabel 35 zum Hochfrequenz - Hochspannungs- Generator 36. Der Unterdruck in der Kammer 34 wird durch eine Luftansaugpumpe 40 mit Verbindungsschlauch 39 erzeugt. Eine Unterdruck - Regulierung in der Unterdruck- Kammer ist durch ein Regulierventil 38 möglich. Der Gehäuseteil 27 hat eine Öffnung 26. Der Gehäuseteil 29 der Unterdruck- Ansaugkammer hat eine Öffnung 25. Setzt man die Öffnung 25 auf eine Haut fläche 37, so wird die Hautfläche 37 durch den entstehenden Ansaugunterdruck der Luftansaugpumpe 40 an die Sicherheitsscheibe 33 der Scheibenelektrode 32 angedrückt. Durch die vom Hochfrequenz- Hochspannungsgenerator 36 abgegebenen elektrischen Ströme entsteht um die aufgedrückte Hautfläche 37 an der Sicherheitsscheibe 33 der Scheibenelektrode 32 ein Elektrolumineszenz- Leuchtbild 43 von epidermalen Emissionen. Das Elektrolumineszenz- Leuchtbild 43 wird von einer Fernsehkamera 22 durch die Öffnungen 25 und 26 und der durchsichtigen Scheibe 28 aufgenommen und über ein Kabel 41 zu einem Fernsehbildschirm 42 übertragen und sichtbar gezeigt.

## Ansprüche

1. Vorrichtung zur Sichtbarmachung von Elektrolumineszenz- Leuchtbildern auf einer durchsichtigen Scheibenelektrode in einem verdunkelten Gehäuse, wobei das Elektrolumineszenz- Leuchtbild eines zu untersuchenden Objektes von einer Fernsehkamera aufgenommen und auf einem Fernsehbildschirm zu Diagnosezwecken sichtbar ist und die entsprechend angeordnet ist, **dadurch gekennzeichnet,** daß in einem lichtdichten Gehäuse (1) eine Fernsehkamera (11) und eine durchsichtige Scheibenelektrode (4) aus Glas oder anderem durchsichtigen Material, mit oder ohne durchsichtigen Sicherheitsscheiben (14) und (15) angeordnet sind und am Gehäuse (1) eine Öffnung, mit einer lichtdichten Manschette, Blende, Vorhang, Bandagen oder andere Verschlußvorrichtung (10) zur Einführung einer Hand, Arm, Fuß, Bein oder anderen Objekten angebracht ist.

2. Vorrichtung nach Anspruch 1, **dadurch gekennzeichnet,** daß die Innenwände des Gehäuses (1) mit dielektrischem Material beschichtet oder ausgekleidet sind. Die Beschichtung oder Auskleidung ist eine Schutzisolierung gegenüber dem Patienten.

3. Vorrichtung nach Anspruch 1 oder einer der folgenden Ansprüche, **dadurch gekennzeichnet,** daß eine Kontakthalterung, zum Beispiel Klemme oder dehnbarer Ring oder Griff, innerhalb oder außerhalb des Gehäuses (1) angebracht ist, welche mit dem Patienten zum Zweck der Schutzableitung in Kontakt gebracht werden kann.

4. Vorrichtung nach Anspruch 1 oder einer der folgenden Ansprüche,
**dadurch gekennzeichnet,**
daß eine Öffnung am Gehäuse (1) vorhanden sein kann. Die Öffnung ist mit einer Tür oder Schieber oder Klappe oder anderer Ausführung versehen welche lichtdicht ist, und mit einer Schutzschaltung verbunden ist durch die beim Öffnen und Schließen des Gehäuses (1) die Betriebsbereitschaft des Gerätes gesteuert werden kann.

5. Vorrichtung nach Anspruch 1 oder einer der folgenden Ansprüche,
**dadurch gekennzeichnet,**
daß eine mechanische oder elektronische Reguliervorrichtung am Gehäuse (1) außerhalb oder innerhalb angebracht ist. Mit der Reguliervorrichtung kann der Unterbrecherabstand an der Unterbrecherspule genau eingestellt werden.

6. Vorrichtung nach Anspruch 1 oder einer der folgenden Ansprüche,
**dadurch gekennzeichnet,**
daß das Gerät mit Entstörfilter für Netzbetrieb oder Entstörfilter für Batteriebetrieb ausgerüstet ist.

7. Vorrichtung nach Anspruch 1 oder einer der folgenden Ansprüche,
**dadurch gekennzeichnet,**
daß ein Dünnschicht- Goldrahmen (5) oder (44) zwischen der durchsichtigen Scheibe (2) oder (30) und der durchsichtigen elektrisch- leitfähigen Dünnschicht (3) oder (31) auf die durchsichtige Scheibe (2) oder (30) aufgetragen ist und die durchsichtige - elektrisch-leitfähige Dünnschicht (3) oder (31) umgibt. Die durchsichtige Scheibe (2) oder (30), die durchsichtige elektrisch- leitfähige Dünnschicht (3) oder (31) und der Dünnschicht Goldrahmen (5) oder (44) ergeben die durchsichtige Scheibenelektrode (4) oder (32).

8. Vorrichtung nach Anspruch 1 oder einer der folgenden Ansprüche,
**dadurch gekennzeichnet,**
daß ein Bildwandler (Lichtverstärker) zwischen der durchsichtigen Scheibenelektrode (4) oder (32) und der Fernsehkamera (11) oder (22) angebracht ist.

9. Vorrichtung nach Anspruch 1, wobei zusätzlich über der durchsichtigen Scheibenelektrode (4) oder (32) ein Gehäuse (18) mit einem Führungskanal (19) für eine bewegliche Elektrode (16) angebracht ist. Das Ende der Elektrode (16) kann mit Testobjekten (8) die auf einem Glas über der durchsichtigen Scheibenelektrode (4) liegen, in Berührung gebracht werden. Die dadurch entstehenden Elektrolumineszenz - Leuchtbilder können zu Diagnosezwecken analysiert werden. Die Vorrichtung ist entsprechend angeordnet und

**dadurch gekennzeichnet,**
daß in einem lichtdichten Gehäuse (1) eine Fernsehkamera (11) und eine durchsichtige Scheibenelektrode (4) angeordnet sind und über der durchsichtigen Scheibenelektrode (4) ein Gehäuse (18) angeordnet ist, und daß in einem Führungskanal (19) eine bewegliche Elektrode (16) angeordnet ist. Ein Glas (20) kann mit Testobjekten (8) unter das Ende der Elektrode (16) geschoben werden. Die Elektrode (16) ist mit einem Masse- Kabel verbunden.

10. Vorrichtung nach Anspruch 1, und die zusätzlich mit einer tragbaren Unterdruck- Ansaugkammer (34) ausgerüstet ist, wobei ein lichtdichtes, tragbares Gehäuse (21) mit einer Unterdruck- Ansaugkammer (34) und einer durchsichtigen Scheibenelektrode (32) ausgerüstet ist. Durch Ansaugen einer Hautoberfläche an die Si cherheitsscheibe der durchsichtigen Scheibenelektrode (32) läßt sich auf diese Weise ein Elektrolumineszenz-Leuchtbild herstellen, das zu Diagnosezwecken auf einen Fernsehbildschirm sichtbar ist und die entsprechend angeordnet ist,
**dadurch gekennzeichnet,**
daß in einem tragbaren, lichtdichten Gehäuse (21) eine durchsichtige Scheibenelektrode (32) mit oder ohne Sicherheitsscheibe (33), eine durchsichtige Scheibe (28) und eine Fernsehkamera (22) angeordnet sind, wobei die durchsichtige Scheibenelektrode (32) mit oder ohne Sicherheitsscheibe (33) und einer durchsichtigen Scheibe (28) an eine Unterdruck- Ansaugkammer (34) angebracht sind und durch Unterdruckansaugfähigkeit einer Pumpe (40) die Haut (37) an die durchsichtige Sicherheitsscheibe (33) oder der durchsichtigen Scheibenelektrode (32) angesaugt und der Andruck durch Ventil (38) geregelt wird.

# Fig. 1

# Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 340 104 (D. KNAPP)<br>* Seite 6, Zeile 16 - Seite 8, Zeile 6; Figuren 1-3 *<br>--- | 1,7,9 | G 03 G 17/00 |
| A | DE-A-3 111 929 (E. IGENBERGS et al.)<br>* Zusammenfassung; Seite 10, Zeilen 1-16; Figuren 1,2 *<br>--- | 1,7,9 | |
| A | CH-A- 509 519 (H. STADTMUELLER)<br>* Spalte 2, Zeile 33 - Spalte 3, Zeile 15; Figur *<br>----- | 10 | |

RECHERCHIERTE SACHGEBIETE (Int. Cl.5)

G 03 G 17/00
A 61 B 5/00

Der vorliegende Recherchenbericht wurde für alle Patentansprüche erstellt

| Recherchenort | Abschlußdatum der Recherche | Prüfer |
|---|---|---|
| BERLIN | 12-10-1989 | WEIHS J.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
................................................................
& : Mitglied der gleichen Patentfamilie, übereinstimmendes Dokument

EPO FORM 1503 03.82 (P0403)